**Europäisches Patentamt**

**European Patent Office**

**Office européen des brevets**

(19)

(11) Veröffentlichungsnummer : **0 365 790 B1**

(12)

# EUROPÄISCHE PATENTSCHRIFT

(45) Veröffentlichungstag der Patentschrift :
**07.10.92 Patentblatt 92/41**

(51) Int. Cl.⁵ : **B60T 8/30,** B60T 13/26

(21) Anmeldenummer : **89116084.8**

(22) Anmeldetag : **31.08.89**

(54) **Vorrichtung zur Bremsung eines Nutzfahrzeugs mit lastabhängig absenkbarer Nachlaufachse.**

(30) Priorität : **28.10.88 DE 3836689**

(43) Veröffentlichungstag der Anmeldung :
**02.05.90 Patentblatt 90/18**

(45) Bekanntmachung des Hinweises auf die
Patenterteilung :
**07.10.92 Patentblatt 92/41**

(84) Benannte Vertragsstaaten :
**ES FR GB IT NL SE**

(56) Entgegenhaltungen :
**EP-A- 0 058 773**
**DE-A- 2 939 907**
**DE-A- 3 124 479**

(56) Entgegenhaltungen :
**DE-A- 3 419 180**
**FR-A- 2 201 997**
**HANS-PETER KLUG:**
**"Nutzfahrzeug-Bremsanlagen" no. 157820,**
**1986, VOGEL Buchverlag, Würzburg B.R.D.**

(73) Patentinhaber : **Daimler-Benz**
**Aktiengesellschaft**
**Postfach 600202 Mercedesstrasse 136**
**W-7000 Stuttgart 60 (DE)**

(72) Erfinder : **Eberhardt, Willi**
**Alemannenstrasse 7**
**W-7056 Weinstadt (DE)**
Erfinder : **Kirsch, Andreas**
**Adlerstrasse 2/1**
**W-7052 Schwaikheim (DE)**

**EP 0 365 790 B1**

**Beschreibung**

Die Erfindung geht aus von einer Vorrichtung zur pneumatischen Bremsung eines Nutzkraftfahrzeugs mit lastabhängig absenkbarer, bremsbarer Nachlaufachse nach der Gattung des Hauptanspruchs.

Bei bekannten lastabhängigen Bremsvorrichtungen für Nutzkraftfahrzeuge, z.B. siehe DE-A-2 248 923, wird mit lastabhängigen Bremskraftreglern für die wenigstens eine Hinterachse eine Verbesserung der Bremsdruckverteilung zwischen Vorderachse und Hinterachse bewirkt, um ein Überbremsen der Hinterräder bei geringer Beladung zu vermeiden und die Vorderachse bezüglich ihrer entwickelbaren Bremskraft gut auszunutzen. Dazu wird beispielsweise ein vom Fahrerwille betätigtes Zweikreis-Betriebsbremsventil verwendet, bei welchem die der/den Vorderachse/n zugeordenete Ventilsektion einen speziellen Steuereingang für ein Drucksignal aufweist, welches vom lastabhängig geregelten Arbeitsdruck des Bremsdruckreglers an der/den Hinterachse/n bezogen wird. Dadurch soll erreicht werden, daß der Vorderachsbremsdruck dem Hinterachsbremsdruck nachgeführt bzw. angepaßt und einem Überbremsen bzw. Block ieren der Vorderräder entgegengewirkt wird.

Diese bekannte Lösung hat aber den Nachteil, daß wohl eine feinfühlige Bremsung bei Teillast bzw. bei unbeladenem Fahrzeug erreicht wird, daß aber eine bei Vollast optimierte Bremsdruckverteilung zwischen Vorder- und Hinterachse/n beim lastabhängig automatischen Anheben einer hinteren Nachlaufachse insgesamt nicht mehr den Erfordernissen für eine lastoptimale Verteilung der Gesamtbremskraft auf dann wenigstens zwei Achsen entspricht.

Es ist daher Aufgabe der Erfindung, eine Vorrichtung zu schaffen, die ein verbessertes Bremsverhalten bei höherer spezifischer Ausnutzbarkeit der Bremsen insgesamt sowohl bei abgesenkter als auch nicht abgesenkter Nachlaufachse ermöglicht.

Diese Aufgabe wird bei einer gattungsgemäßen Vorrichtung mit dem kennzeichnenden Merkmal des Hauptanspruches gelöst. Vorteilhafte Ausgestaltungen sind anhand Lehre der Unteransprüche gegeben. Die erfindungsgemäße Vorrichtung weist zum einen den Vorteil auf, daß ein feinfühliges Ansprechen der Bremse sowohl bei teil- und unbeladenem als auch bei voll beladeem Fahrzeug (z.B. Zwei- bzw. Dreiachsbetrieb) erreicht wird, und daß ein gewisser Pedalweg für Bremsung des Fahrzeugs an der Blockiergrenze unabhängig von Zwei- oder Dreiachsbetrieb weitgehend erhalten bleibt. Zum anderen benötigt die Vorrichtung über die bekannte Installationskonfiguration am Fahrzeug hinaus im wesentlichen nur zwei relativ preiswerte und mit hoher Zuverlässigkeit verfügbare Ventilelemente, die entweder unmittelbar vom Druck des Liftbalgs der Nachlaufachse oder von einem diesen abtastenden Sensor ansteuerbar sind. Durch wahlweisen Einsatz von Druckminderventilen mit verschiedenen Knickpunkten bzw. Steigungen der Übertragsunscharakteristik können zudem einheitliche Standardinstallationen kundenspezifischen Sonderausrüstungen des Bremssystems in einfacher Weise besser angepaßt werden.

Ein Ausführungsbeispiel der Erfindung ist in der Zeichnung dargestellt und in der nachfolgenden Beschreibung näher erläutert. Es zeigen:

Fig. 1 das Funktionsschaltbild einer erfindungemäßen Vorrichtung mit unmittelbar pneumatisch umgesteuerter Reduktion des lastachsabhängig zum Betriebsbremsventil rückgespeisten Hinterachsbremsdruckes;

Fig. 2 einen Auszug aus dem entsprechenden Funktionsschaltbild einer Vorrichtung, die einen elektrischen Druckwandler und ein elektromagnetisches 3/2-Wegeventil benutzt;

Fig. 3 ein schamtisches Diagramm beispielhafter Übertragungsfunktionen eines erfindungsgemäß eingesetzten Reduzierventils.

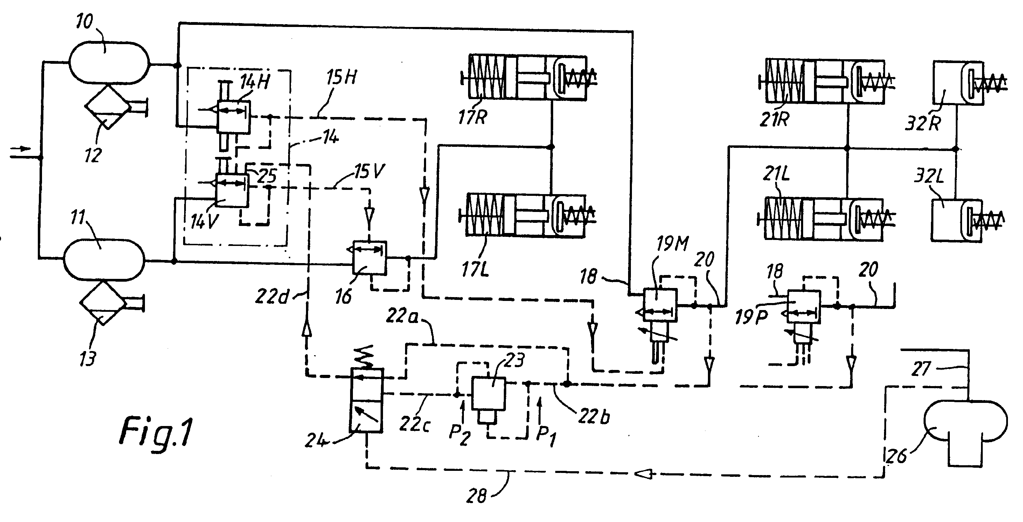

Gemäß Figur 1 umfaßt die Vorrichtung zwei Einkammer-Druckluftspeicher 10 und 11 mit entsprechenden Wasserabscheidern 12 und 13, die von einem nicht dargestellten Luftpresser mit Vorratsdruck gespeist werden. Von dort aus gelangt der Vorratsdruck an die Einlässe der zwei Sektionen 14H und 14V des pedalbetätigten Zweikreis-Betriebsbremsventils 14. Vom Ausgang der Sektion 14V wird über eine Steuerleitung 15V ein proportional wirkendes Relaisventil 16 angesteuert, welches seinerseits nach Maßgabe seiner betriebsbremsventilseitigen Ansteuerung den Vorratsdruck des Speichers 11 auf die Betriebsbremsteile der Kombibremszylinder 17L und 17R der Vorderachse analog durchschaltet.

Vom Ausgang der Sektion 14H wird über die Leitung 15H ein achslastabhängiger Hinterachs-Bremsdruckregeler 19M (mit mechanischer Achslastsensierung) oder 19P (mit pneumatischer Achslastsensierung) angesteuert, dessen Druckeingang 18 vom Druckluftspeicher 10 mit Vorratsdruck beaufschlagt wird; der jeweilige Ausgang 20 übergibt den ausgesteuerten Arbeitsdruck an die Betriebsbremsteile der Kombibremszylinder 21R und 21L der angtriebenen Hinterachse sowie an Membranbremszylinder 32R und 32L der absenkbaren Nachlaufachse.

Vom Ausgang 20 des Bremsdruckreglers 19M bzw. 19P führt eine Leitung 22a an den ersten Eingang eines 3/2-Wegeventils 24. In entsprechender Weise führt eine Leitung 22b von besagtem Ausgang 20 zum Eingang eines Reduzierventils 23, dessen Ausgang wiederum über eine Leitung 22c mit dem zweiten Eingang des 3/2-Wegeventils 24 verbunden ist. Über die Leitung 22d steht der Ausgang des letzteren mit einem Steuereingang 25 der Vorderachssektion 14V des Betriebsbremsventils 14 in Verbindung.

Zum bedarfsweisen, vorzugsweise lastabhängig automatischen Anheben oder Absenken der Nachlaufachse ist ein pneumatischer Liftbalg 26 vorgesehen, welcher über eine Speiseleitung 27 mit Druck beaufschlagt werden kann, mit der Wirkung, daß die Nachlaufachse dadurch angehoben wird. Der Balgdruck gelangt als Steuersignal über die Fühlleitung 28 an den Steuereingang des 3/2-Wegeventils 24. Ist der Druck im Liftbalg gering oder Null, weist das 3/2-Wegeventil 24 die angedeutete Stellung auf, wodurch der volle, vom Bremsdurckregler 19M bzw. 19P an die Hinterachsbremszylinder abgegebene Arbeitsdruck auch zur Ansteuerung der Vorderachssektion 14V an das Betriebsbremsventil 14 gelangt.

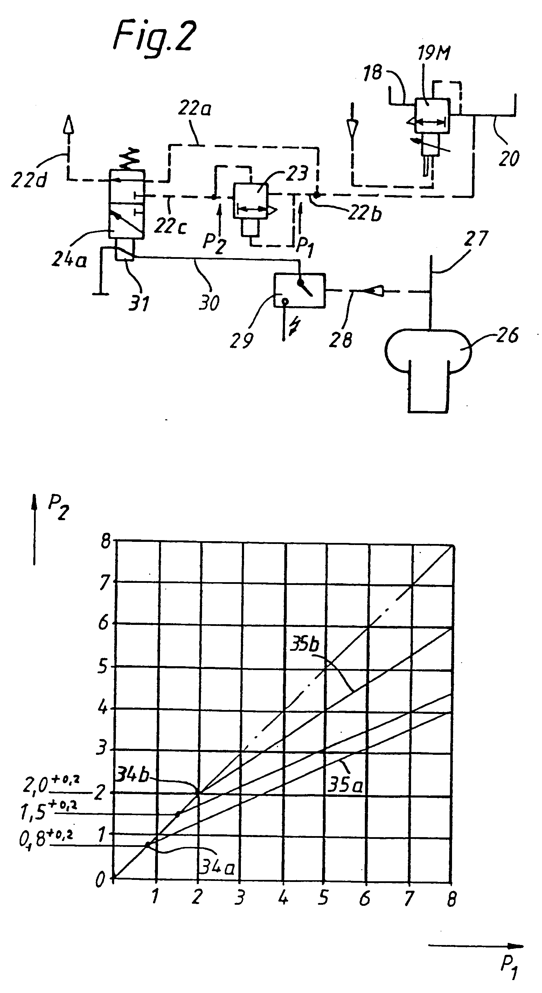

Figur 2 veranschaulicht anhand eines Auszugs aus einem entsprechenden Funktionsschaltbild eine Abwandlung der erfindungsgemäßen Vorrichtung. Bei ihr ist die unmittelbar pneumatische Ansteuerung des 3/2-Wegeventils 24 ersetzt durch eine elektromagnetische. Dazu ist ein elektrischer Drucksensor mit der Charakteristik eines druckempfindlichen Schalters 29 vorgesehen, der über die Druckfühlleitung 28 mit dem von der Position der Nachlaufachse abhängenden Liftbalgdruck beaufschlagt wird.

Überschreitet der Balgdruck einen gewissen niedrigen Grenzwert, schaltet der druckempfindliche Schalter 29 seine Ausgangsleitung 30 an die Bordnetzspannung, und bestromt auf diese Weise die daran angeschlossene Erregerspule 31 des elekromagnetisch wirkenden 3/2-Wegeventils 24a, das dann die der gezeigten Lage entgegengesetzte Lage einnimmt und so die Übertragungscharakteristik gemäß Figur 3 des Reduzierventils 23 zwischen den Arbeitsdruckausgang 20 des Bremsdruckreglers 19M bzw. 19P und den Steuereingang 25 der Vorderachssektion 14V des Betriebsbremsventils 14 schaltet; es liegt insoweit dieselbe Wirkung wie im Falle der unmittelbar pneumatischen Ansteuerung des Ventils 24 gemäß Figur 1 vor.

Figur 3 zeigt schematisch die Charaktersitik des Reduzierventils 23, welche seinen Eingangsdruck $P_1$ und seinen Ausgangsdruck $P_2$ miteinander verknüpft. Es sind zwei beispielhafte Kennlinien 35a und 35b veranschaulicht. Bei Kennlinie 35a wird bis zu einem gewissen Eingangsdruck $P_1$ von beispielsweise 0,8 bar derselbe auf den Ausgangsdruck $P_2$ 1:1 übertragen. Ab dem Abknickpunkt 34a, bei welchem ein Eingangsdruck $P_1$ von etwa 0,8 bar erreicht ist, führt eine weitere Erhöhung von $P_1$ nur noch zu einer um einen bestimmten konstanten Faktor reduzierten Erhöhung des Ausgangsdruckes $P_2$. Anloges gilt für die beispielhafte Kennlinie 35B, die einen bei etwa 2 bar liegenden Abknickpunkt 34b als Begrenzung des Bereichs einer 1:1-Übertragung des Eingangsdruckes $P_1$ auf den Ausgangsdruck $P_2$ aufweist.

Durch die Übertragung bis zu einer gewissen Grenze des vollen lastabhängig geregelten Hinterachs-Arbeitsdruckes an die Vorderachssektion des Zweikreis-Betriebbremsventils 14 und die daran anschließend nur noch partielle Übertragung weiteren Druckanstieges werden die eingangs erwähnten Vorteile und eine erheblich verbesserte Anpassung der Bremsdruckverteilung an die Lastsituationen mit angehobener Nachlaufachse erreicht. Unter Sicherheitsaspekt ist bei Ausfall des Ansteuerpfades des 3/2-Wegeventils auch bei Teilbeladung jedenfalls der volle Arbeitsbremsdruck entwickelbar.

## Patentansprüche

1. Vorrichtung zur pneumatischen Bremsung eines Nutzkraftfahrzeugs mit lastabhängig absenkbarer, pneumatisch anhebbarer, bremsbarer Nachlaufachse, welche (Vorrichtung) umfaßt
   – ein Zweikreis-Betriebsbremsventil (14) mit einer Hinterachs- (14H) und einer Vorderachssektion (14V), welche vom jeweiligen Hinterachsbremsdruck (20) beeinflußbar ist (22a,22d);
   – einen in Abhängigkeit von der Achslast mechanisch oder pneumatisch ansteuerbaren automatischen Bremsdruckregler (19M bzw. 19P), welcher eingangsseitig Vorratsdruck (10,18) bezieht und ausgangsseitig hinterachsige Radbremszylinder (21,32) nach Maßgabe einer Achslast mit Betriebsdruck (20) speist und zur entsprechenden Beeinflussung (22a,22d,15V,16) des Vorderachsbremsdruckes die Vorderachssektion des Zweikreis-Betriebsbremsventils (14V) ansteuert, **dadurch gekennzeichnet**, daß zwischen den Ausgang (20) besagten Bremsdruckreglers (19M bzw. 19P) und den Steuereingang (25) der Vorderachssektion (14V) des Zweikreis-Betriebsbremsventils (14) in Abhängigkeit von der Position der Nachlaufachse ein druckreduzierendes Element (23) einschaltbar ist.

2. Vorrichtung nach Anspruch 1,
   **dadurch gekennzeichnet**,
   daß das druckreduzierende Element ein Reduzierventil (23) ist, dessen Ausgangsdruck ($P_2$) mit dem Eingangsdruck ($P_1$) bis zu einem vorbestimmten Grenzwert des letzteren identisch ist, oberhalb dieses Grenzwertes jedoch proportional reduziert wird.

3. Vorrichtung nach Anspruch 1,
**dadurch gekennzeichnet**,
daß zur Erfassung der Position der Nachlaufachse der Druck in einem sie anhebenden Liftbalg (26) ausgewertet wird, und daß durch den Liftbalgdruck ein dem Steuereingang (25) der Vorderachssektion (14V) des Betriebsbremsventils (14) vorgeschaltetes 3/2-Wegeventil (24) ansteuerbar ist, welches bei hohem Balgdruck den Ausgang des Reduzierventils (22c) und bei niedrigem Balgdruck den Ausgang (20) des achslastabhängigen Hinterachs-Bremsdruckreglers (19M bzw. 19P) durchschaltet.

4. Vorrichtung nach Anspruch 3,
**dadurch gekennzeichnet**,
daß das 3/2-Wegeventil (24) pneumatisch ansteuerbar ist und seine Ansteuerung unmittelbar durch den Liftbalgdruck selbst geschieht.

5. Vorrichtung nach Anspruch 3,
**dadurch gekennzeichnet**,
daß das 3/2-Wegeventil (24a) ein elektrisch ansteuerbares Magnetventil ist, und daß zwischen seine Erregerwicklung (31) und den Liftbalg (26) bzw. dessen Speiseleitung (27) ein druckempfindlicher Schalter (29) geschaltet (28, 30) ist, durch welchen bei hohem Balgdruck bzw. angehobener Nachlaufachse besagte Erregerwicklung (31) mit der Bordnetzspannung beaufschlagbar ist.

## Claims

1. Device for the pneumatic braking of a utility motor vehicle with a brakable trailing axle which can be lowered depending on the load and raised pneumatically, which device comprises;
   – a dual circuit operational brake valve (14) with a rear axle (14H) and a front axle section (14V) which can be influenced (22a, 22d) by the pressure for the time being (20) of the rear axle brake;
   – a brake pressure regulator (19M or 19P) operating automatically which can be controlled mechanically or pneumatically by the axial load which, on the input side draws supply pressure (10, 18) and, on the output side supplies rear axle wheel brake cylinders (21, 32) with working pressure (20) depending upon an axial load and controls the front axle section of the dual circuit operational brake valve (14V) for the corresponding influencing (22a, 22d, 15V, 16) of the front axle brake pressure, characterized in that, between the output (20) of the said brake pressure regulator (19M or 19P) and the control input (25) of the front axle section (14V) of the dual circuit operational brake valve (14), a pressure reducing element (23) can be switched on depending upon the position of the trailing axle.

2. Device according to claim 1, characterized in that the pressure reducing element is a reducing valve (23) the output pressure (P2) is identical with the input pressure (P1) up to a predetermined limit value of the latter, though, above this limit value, it will be proportionally reduced.

3. Device according to claim 1, characterized in that, to detect the position of the trailing axle, pressure in lifting bellows (26) which raise said axle is evaluated, and in that, by means of the pressure in the lifting bellows, it is possible to control a 3/2-way valve (24) mounted upstream of the control input (25) of the front-axle section (14V) of the operational brake valve (14) which, on high bellows pressure, switches through the output of the reducing valve (22c) and, on low bellows pressure, switches through the output (20) of the axial-load-dependent rear axle brake pressure regulator (19M or 19P).

4. Device according to claim 3, characterized in that the 3/2-way valve (24) is pneumatically controllable, and its control is effected directly by the lifting bellows pressure itself.

5. Device according to claim 3, characterized in that the 3/2-way valve (24a) is an electrically controllable magnetic valve, and in that, mounted (28, 30) between its exciting winding (31) and the lifting bellows (26) or its supply duct (27), is a pressure-sensitive switch (29) by means of which, when bellows pressure is high or the trailing axle is raised, the said exciting winding (31) can be acted upon by the supply system on board the vehicle.

## Revendications

1. Dispositif de freinage pneumatique d'un véhicule utilitaire avec un essieu traîné freinable, pouvant être soulevé pneumatiquement et abaissé en fonction de la charge, le dispositif comprenant
   – un distributeur de frein de service (14) à deux circuits avec une section d'essieu arrière (14H) et une section d'essieu avant (14V), qui peut être influencée (22a, 22d) par la pression de freinage d'essieu arrière respective (20),
   – un régulateur automatique de pression de freinage (19M ou 19P), pouvant être asservi mécaniquement ou pneumatiquement en fonction de la charge d'essieu, qui reçoit du côté d'entrée une pression d'alimentation (10, 18) et qui, du côté de sortie, alimente en pression de service (20) des cylindres de frein de roue d'essieu arrière (21, 32) en fonction d'une charge d'essieu indiquée et, afin d'influencer d'une manière correspondante (22a, 22d, 15V, 16) la pression de freinage d'essieu avant, asservit la section d'essieu avant (14V) du distributeur de frein de service à deux circuits,
   **caractérisé** en ce qu'un élément (23), réduisant la pression, peut-être branché en fonction de la position de l'essieu traîné, entre la sortie (20) du régulateur de pression de freinage précité (19M ou 19P) et l'entrée de commande (25) de la section d'essieu avant (14V) du distributeur de frein de service (14) à deux circuits.

2. Dispositif selon la revendication 1, **caractérisé** en ce que l'élément réduisant la pression est un détendeur (23), dont la pression de sortie ($P_2$) est identique à la pression d'entrée ($P_1$) jusqu'à une valeur limite prédéterminée de cette dernière, mais est réduite d'une manière proportionnelle au-dessus de cette valeur limite.

3. Dispositif selon la revendication 1, **caractérisé** en ce qu'afin de déterminer la position de l'essieu traîné, on évalue la pression dans un sac d'air (26) qui le soulève, et en ce que la pression du sac d'air permet d'asservir un distributeur 3/2 voies (24), qui est monté avant l'entrée de commande (25) de la section d'essieu avant (14V) du distributeur de frein de service (14), et qui lui relie la sortie (22c) du détendeur si la pression du sac est élevée et, si la pression du sac est faible, la sortie (20) du régulateur (19M ou 19P) de la pression de freinage d'essieu arrière en fonction de la charge d'essieu.

4. Dispositif selon la revendication 3, **caractérisé** en ce que le distributeur 3/2 voies (24) peut être asservi pneumatiquement, et son asservissement s'effectue directement par la pression du sac d'air elle-même.

5. Dispositif selon la revendication 3, **caractérisé** en ce que le distributeur 3/2 voies (24a) est une soupape électromagnétique, et en ce qu'un commutateur (29) réagissant à la pression est monté (28, 30) entre le bobinage d'excitation (31) de cette soupape et le sac d'air (26) ou encore la conduite d'alimentation (27) de ce dernier, commutateur au moyen duquel, lorsque la pression du sac est élevée ou encore l'essieu traîné soulevé, le bobinage d'excitation précité (31) peut être sollicité par la tension électrique du réseau de bord.

*Fig.1*

EP 0 365 790 B1

# Fig.2